# EUROPEAN PATENT APPLICATION

(11) **EP 4 589 728 A1**
(43) Date of publication of application: **23.07.2025**
(21) Application number: 25152067.2
(22) Date of filing: 15.01.2025
(51) Int. Cl.: H01M 10/60, H01M 10/615

(54) **BATTERY HEATING DEVICE**

(30) Priority: 16.01.2024 KR 20240006754
(71) Applicant: Samsung SDI Co., Ltd., Yongin-si, Gyeonggi-do 17084 (KR); Samsung Mechatronics Co., Ltd., Hwaseong-si, Gyeonggi-do 18487 (KR)
(72) Inventor: Cho, Byoungchul, Yongin-si, Gyeonggi-do 17084 (KR); Song, Taeyong, Yongin-si, Gyeonggi-do 17084 (KR); Seo, Sangchul, Yongin-si, Gyeonggi-do 17084 (KR); Heo, Hyungu, Yongin-si, Gyeonggi-do 17084 (KR); Pyo, Younghak, Yongin-si, Gyeonggi-do 17084 (KR); Jung, Daelim, Hwaseong-si, Gyeonggi-do 18487 (KR); Kwak, Mangweon, Hwaseong-si, Gyeonggi-do 18487 (KR); Park, Daehong, Hwaseong-si, Gyeonggi-do 18487 (KR)
(74) Representative: Gulde & Partner

(57) **Abstract**

Provided is a battery heating device. The battery heating device includes a lower plate, a support module arranged on the lower plate and configured to allow each of a plurality of cylindrical batteries to be inserted thereinto, and a heating element arranged between the lower plate and the support module and configured to heat the plurality of cylindrical batteries. The support module may include a first module including a plurality of accommodation spaces in which the plurality of cylindrical batteries are respectively accommodated and a plurality of openings provided to allow the plurality of cylindrical batteries to be inserted thereinto. The support module may include a second module arranged on the first module and including a plurality of penetration portions respectively corresponding to the plurality of openings to adjust positions at which the plurality of cylindrical batteries are respectively accommodated in the plurality of accommodation spaces.

## Description

### FIELD

One or more embodiments relate to a battery heating device.

### BACKGROUND

Secondary batteries can be charged and discharged a plurality of times so as to be used repeatedly. Secondary batteries are used as energy sources for mobile devices, electric vehicles, hybrid vehicles, electric bicycles, uninterruptible power supplies, etc. According to a type of an external device they are applied to, secondary batteries can be used in the form of a single battery or in the form of a pack in which multiple battery cells are connected and grouped into one unit.

### SUMMARY

One or more embodiments include a battery heating device configured to accommodate a plurality of cylindrical batteries and uniformly heat each of the plurality of cylindrical batteries.

One or more embodiments include a battery heating device capable of providing a support module applicable to various types of cylindrical batteries by replacing a second module as the type of a cylindrical battery to which the support module is to be applied is changed.

Additional aspects will be set forth in part in the description which follows and, in part, will be apparent from the description, or may be learned by practice of the presented embodiments of the present disclosure.

According to one or more embodiments, a battery heating device configured to accommodate and heat a plurality of cylindrical batteries includes a lower plate, a support module arranged on the lower plate and configured to allow each cylindrical battery of the plurality of cylindrical batteries to be inserted into the support module, and a heating element arranged between the lower plate and the support module and configured to heat the plurality of cylindrical batteries, in which the support module includes a first module including a plurality of accommodation spaces configured to accommodate the plurality of cylindrical batteries therein and a plurality of openings configured to allow the plurality of cylindrical batteries to be respectively inserted into the plurality of openings, and a second module arranged on the first module and including a plurality of penetration portions respectively corresponding to the plurality of openings configured to adjust a position at which the plurality of cylindrical batteries are respectively accommodated in the plurality of accommodation spaces when accommodated therein.

The support module may be further configured such that the plurality of cylindrical batteries do not contact sidewalls of the plurality of accommodation spaces when accommodated therein.

Diameters of the plurality of penetration portions may be different from each other according to different diameters of the plurality of cylindrical batteries.

Each of the plurality of openings and the plurality of penetration portions may be circular.

An opening of the plurality of openings and a respective penetration portion of the plurality of penetration portions corresponding to the opening may have a same central axis.

A diameter of the respective penetration portion corresponding to the opening may be less than a diameter of the opening.

The support module may include a fixing element configured to fix relative positions of the first module and the second module.

The fixing element may be further configured to fix the plurality of penetration portions to positions respectively corresponding to the plurality of openings.

The second module may include a protrusion structure extending from each of the plurality of penetration portions, and the protrusion structure may be formed to oppose the first module from each of the plurality of penetration portions.

At least a part of the protrusion structure may be inserted into the plurality of openings.

The protrusion structure may have a cylindrical shape.

An inner diameter of the protrusion structure may be less than a diameter of each of the plurality of accommodation spaces.

A material of the first module may include a metal material.

A material of the second module may include a thermal insulation material.

The battery heating device may further include a control module configured to detect a temperature of each of the plurality of accommodation spaces.

A method of manufacturing a battery heating device configured to accommodate and heat a plurality of cylindrical batteries, according to some embodiments, includes: providing a lower plate; arranging a support module on the lower plate, wherein the support module may be configured to allow each cylindrical battery of the plurality of cylindrical batteries to be inserted into the support module; and arranging a heating element between the lower plate and the support module, wherein the heating element may be configured to heat the plurality of cylindrical batteries, wherein the support module comprises: a first module comprising a plurality of accommodation spaces configured to accommodate the plurality of cylindrical batteries and a plurality of openings configured to allow the plurality of cylindrical batteries to be respectively inserted into the plurality of openings; and a second module arranged on the first module and comprising a plurality of penetration portions respectively corresponding to the plurality of openings to adjust a position at which the plurality of cylindrical batteries are respectively accommodated in the plurality of accommodation spaces when accommodated therein.

The method may include providing a fixing element configured to fix relative positions of the first module and the second module.

The method may include providing a control module configured to detect a temperature of each of the plurality of accommodation spaces.

The support module may be further configured such that the plurality of cylindrical batteries do not contact sidewalls of the plurality of accommodation spaces when accommodated therein.

Diameters of the plurality of penetration portions may be different from each other according to different diameters of the plurality of cylindrical batteries.

### BRIEF DESCRIPTION OF THE DRAWINGS

The above and other aspects, features, and advantages of certain embodiments of the present disclosure will be more apparent from the following description taken in conjunction with the accompanying drawings.
FIG. 1 is a perspective view of a battery heating device according to some embodiments;
FIG. 2 is a perspective view of a plurality of cylindrical batteries during insertion into the battery heating device of FIG. 1, according to some embodiments;
FIG. 3 is an exploded view of the battery heating device of FIG. 1, according to some embodiments;
FIG. 4 is a part of a cross-sectional perspective view of a cross-section A-A' of the battery heating device of FIG. 1;
FIG. 5 is a perspective view of a battery heating device including a plurality of support modules, according to some embodiments;
FIG. 6 is a cross-sectional view conceptually showing an enlarged portion of the battery heating device shown in FIG. 4;
FIG. 7 is a cross-sectional view showing a penetration portion formed to have a diameter less than a diameter of an opening in the battery heating device shown in FIG. 6;
FIG. 8 is a cross-sectional view showing a second module having a protrusion structure formed therein in the battery heating device shown in FIG. 7;
FIG. 9 shows a cylindrical battery during insertion into the battery heating device of FIG. 8; and
FIG. 10 shows a cylindrical battery with a diameter less than that of a cylindrical battery inserted into the battery heating device of FIG. 9 during insertion.

### DETAILED DESCRIPTION

Reference will now be made in detail to some embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

Hereinafter, embodiments of the present disclosure will be described in detail with reference to the accompanying drawings. The terms and words used in the present specification and claims should not be construed as being limited to ordinary or dictionary meanings, and should be interpreted as meanings and concepts consistent with the technical idea of the present disclosure based on the principle that the present inventors may appropriately define the concept of the terms to describe the present techniques in the most suitable way. Therefore, it should be understood that the configurations shown in the drawings and embodiments described in this specification may merely be the most preferred embodiments of the present disclosure, and may not represent all of the technical ideas of the present disclosure, such that there may be various equivalents and variations that replace them at the time of filing the present application. If used herein, "comprise, include" and/or "comprising, including" specify mentioned shapes, numbers, steps, operations, members, components, and/or presence of these groups, and do not exclude the presence or addition of one or more different shapes, numbers, operations, members, components, and/or groups. If embodiments of the present disclosure are described, "can" or "may" may include "one or more embodiments of the present disclosure".

To help understanding of the present disclosure, the accompanying drawings are not shown according to the actual scale, and the dimensions of some components may be exaggerated. The same reference numeral may be given to the same component in different embodiments.

The statement that two comparison targets are 'the same' as each other may mean that they are 'substantially the same' as each other. Thus, a case where they are 'substantially the same' as each other may include a case where they have a deviation regarded as a low level, e.g., a deviation of 5% or less. If a uniform parameter is uniform in a predetermined area, it may mean that it is uniform from an average point of view.

Although first (1st), second (2nd), etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

If a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

If a component is described as being "connected" or "coupled" to another component, it should be understood that the components may be directly connected or connectable to each other, or another component may be "interposed" between the components, or the components may be "connected" or "coupled" to each other through another component. If a portion is electrically coupled to another portion, this may include not only a case where they are directly connected to each other, but also a case where they are connected with another element therebetween.

Throughout the specification, "A and/or B" may mean A or B, or A and B unless specially stated otherwise. That is, "and/or" may include all or any combination of a plurality of items listed. "C to D" may mean at least C but not more than D, unless specially stated otherwise.

Hereinafter, a battery heating device according to embodiments will be described with reference to the accompanying drawings.

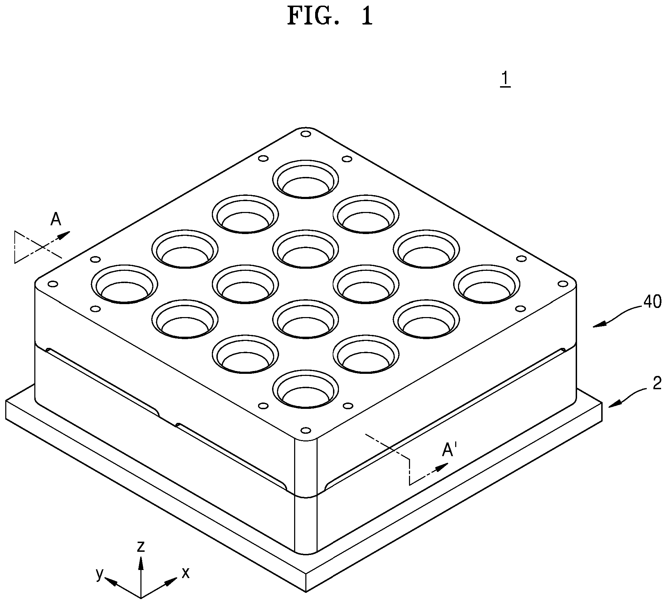

FIG. 1 is a perspective view of a battery heating device, according to some embodiments.

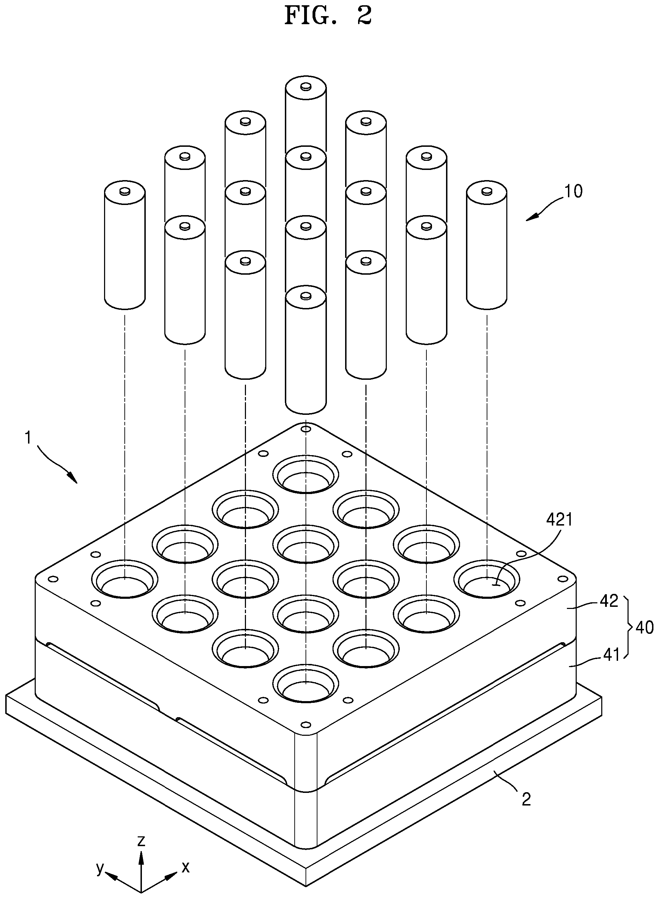

Referring to FIG. 1, a battery heating device 1 according to some embodiments may include a lower plate 2 and a support module 40. The support module 40 may be arranged on the lower plate 2. The support module 40 may be fixed on the lower plate 2. The support module 40 may remain horizontal with respect to the ground on the lower plate 2. The lower plate 2 may be formed such that the support module 40 remains horizontal with respect to the ground. The support module 40 may remain horizontal with respect to the ground such that the support module 40 stably accommodates a cylindrical battery 10 (e.g., as described in relation to FIG. 2). The support module 40 may remain horizontal with respect to the ground such that an axis of the cylindrical battery 10 inserted into the support module 40 is positioned perpendicular to the ground. However, an arrangement of the support module 40 and the lower plate 2 may not be limited to the foregoing description.

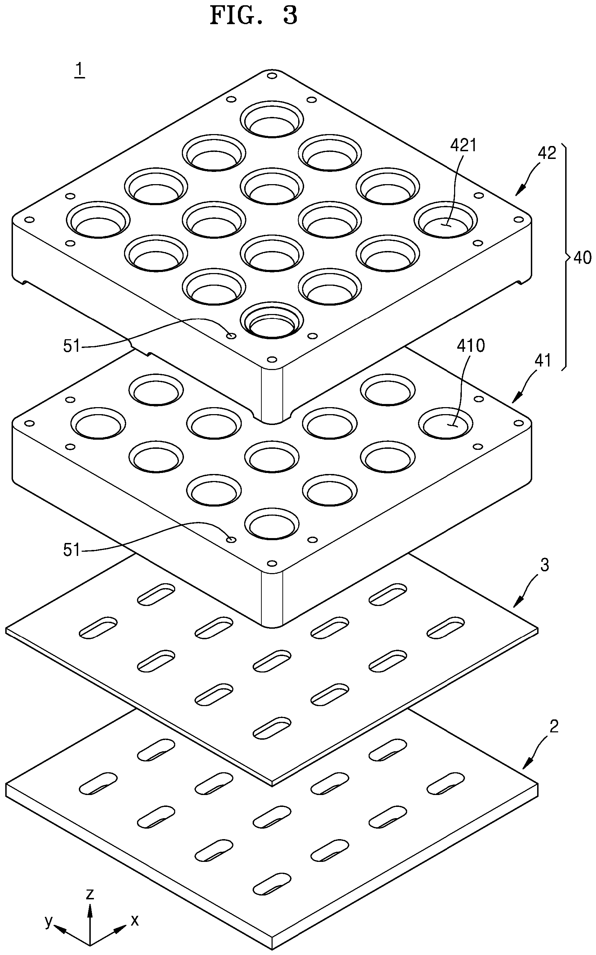

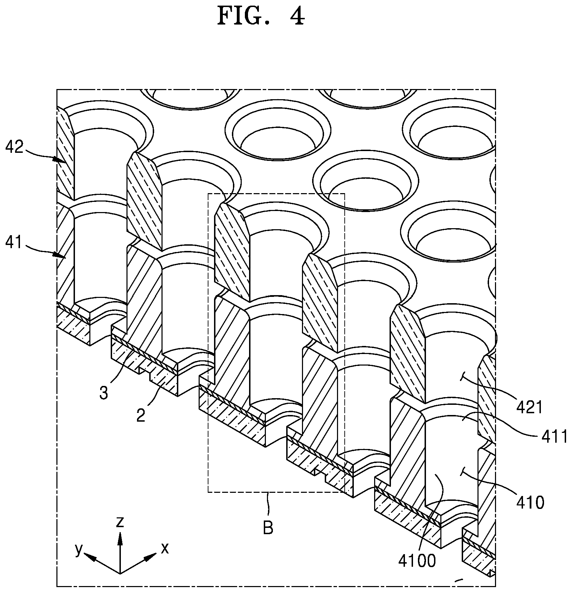

FIG. 2 is a perspective view of a plurality of cylindrical batteries during insertion into battery heating device 1, according to some embodiments. FIG. 3 is an exploded view of battery heating device 1, according to some embodiments. FIG. 4 is a part of a cross-sectional perspective view of a cross-section A-A' of the battery heating device 1 of FIG. 1.

Referring to FIGS. 1 to 4, the cylindrical battery 10 may be inserted into the battery heating device 1, according to some embodiments. The cylindrical battery 10 may be accommodated in the battery heating device 1. The cylindrical batteries 10 may be provided in plural. Each of the plurality of cylindrical batteries 10 may be inserted into the battery heating device 1. Each of the plurality of cylindrical batteries 10 may be accommodated in the battery heating device 1.

Each of the plurality of cylindrical batteries 10 may be inserted into the support module 40, according to some embodiments. Each of the plurality of cylindrical batteries 10 may be accommodated in the battery heating device 1. In the following description, the cylindrical battery 10 may mean the single cylindrical battery 10 or the plurality of cylindrical batteries 10 according to the context, unless explicitly described as plural.

The support module 40 according to embodiments may include a first module 41. The first module 41 may accommodate the cylindrical battery 10. Each cylindrical battery 10 may be accommodated in the first module 41. The first module 41 may include a plurality of accommodation spaces 410. Each cylindrical battery 10 may be accommodated in the accommodation space 410 of the first module 41. The cylindrical battery 10 may be supported by the first module 41 in the accommodation space 410.

The accommodation space 410 of the first module 41, according to some embodiments, may be formed to surround at least a part of each cylindrical battery 10. The accommodation space 410 of the first module 41 may be formed to cover at least a part of an outer circumferential surface of the cylindrical battery 10. The accommodation space 410 of the first module 41 may be formed greater than a circumference of the cylindrical battery 10. A sidewall 4100 of the accommodation space 410, which defines at least a part of the accommodation space 410, may be formed to follow at least a part of the outer circumferential surface of the cylindrical battery 10. The sidewall 4100 of the accommodation space 410 may be formed spaced apart by a predetermined gap from the outer circumferential surface of the cylindrical battery 10. The cylindrical battery 10 may not directly contact the sidewall 4100 of the accommodation space 410 in the accommodation space 410 of the first module 41. Specific details about this will be described later.

The first module 41, according to some embodiments, may include a plurality of openings 411 provided to allow the cylindrical battery 10 to be inserted thereinto. In the following description, the opening 411 may mean the single opening 411 or the plurality of openings 411, depending on the context.

The opening 411 of the first module 41, according to some embodiments, may be formed in an upper portion of the accommodation space 410 of the first module 41. The opening 411 may be formed to be circular. If the opening 411 is formed to be circular, the opening 411 viewed from a top view may be circular. Each cylindrical battery 10 may be inserted into the accommodation space 410 through the opening 411 of the first module 41. If the cylindrical battery 10 is inserted through the opening 411, the cylindrical battery 10 may be inserted into the opening 411 through a member other than the first module 41. For example, the cylindrical battery 10 may be inserted into the opening 411 of the first module 41 through a second module 42 described below. However, the foregoing description of a manner in which the cylindrical battery 10 is accommodated in the accommodation space 410 may be merely an example description, and the present disclosure is not limited thereto.

The support module 40, according to some embodiments, may include the second module 42. The second module 42 may be arranged on the first module 41. The first module 41 may be arranged under the second module 42.

The second module 42, according to some embodiments, may adjust a position at which the cylindrical battery 10 is accommodated in the first module 41. The second module 42 may function to adjust a position at which the cylindrical battery 10 is accommodated in the accommodation space 410 of the first module 41. The second module 42 may function to adjust a position at which the cylindrical battery 10 is inserted into the opening 411 of the first module 41. A position at which each cylindrical battery 10 is accommodated in the first module 41 may be adjusted by the second module 42. A position at which each cylindrical battery 10 is accommodated in the accommodation space 410 of the first module 41 may be adjusted by the second module 42. A position at which each cylindrical battery 10 is inserted into the opening 411 of the first module 41 may be adjusted by the second module 42.

If the position at which the cylindrical battery 10 is accommodated is adjusted, each cylindrical battery 10 may be accommodated to avoid being biased to one side in the accommodation space 410 of the first module 41. If the position at which the cylindrical battery 10 is accommodated is adjusted, each cylindrical battery 10 may be arranged to be spaced apart from the sidewall 4100 of the accommodation space 410 in the accommodation space 410 of the first module 41 by a predetermined space. If the position at which the cylindrical battery 10 is accommodated is adjusted, each cylindrical battery 10 may be arranged in a center portion in the accommodation space 410 of the first module 41. If the position at which the cylindrical battery 10 is accommodated is adjusted, each cylindrical battery 10 may not directly contact the sidewall 4100 of the accommodation space 410 of the first module 41. However, the function of the second module 42 is not limited to the foregoing description.

The second module 42, according to some embodiments, may include a plurality of penetration portions 421. In the following description, the penetration portion 421 may mean the single penetration portion 421 or the plurality of penetration portions 421, depending on the context. The penetration portion 421 may be an area in which the cylindrical battery 10 is inserted in the direction of the second module 42. The penetration portion 421 may be an area in which the cylindrical battery 10 penetrates a top surface and a bottom surface of the second module 42 toward the first module 41. Each penetration portion 421 may correspond to the opening 411 of the first module 41. The penetration portion 421 may be formed to be circular. If the penetration portion 421 is formed to be circular, the penetration portion 421 viewed from a top view may be circular. A side of each penetration portion 421 may correspond to an insertion portion of the first module 41.

The penetration portion 421, according to some embodiments, may function to adjust a position at which the cylindrical battery 10 is accommodated in the first module 41. The penetration portion 421 may function to adjust a position at which the cylindrical battery 10 is accommodated in the accommodation space 410 of the first module 41. The penetration portion 421 may function to adjust a position at which the cylindrical battery 10 is inserted into the opening 411 of the first module 41. A position at which each cylindrical battery 10 is accommodated in the first module 41 may be adjusted by the penetration portion 421. A position at which each cylindrical battery 10 is accommodated in the accommodation space 410 of the first module 41 may be adjusted by the penetration portion 421. A position at which each cylindrical battery 10 is inserted into the opening 411 of the first module 41 may be adjusted by the penetration portion 421.

The penetration portion 421 applicable to the second module 42, according to some embodiments, may have a plurality of shapes. A shape of the penetration portion 421 may be defined according to a diameter of the penetration portion 421 into which the cylindrical battery 10 is inserted. For example, if the diameter of the cylindrical battery 10 inserted into the support module 40 is large, the diameter of the penetration portion 421 may be formed to be large. For example, if the diameter of the cylindrical battery 10 inserted into the support module 40 is small, the diameter of the penetration portion 421 may be formed to be small. For example, if the length of the cylindrical battery 10 inserted into the support module 40 is long, the penetrating length of the penetration portion 421 may be formed to be long. For example, if the length of the cylindrical battery 10 inserted into the support module 40 is short, the penetrating length of the penetration portion 421 may be formed to be short. That is, the penetration portion 421 having a different shape according to the shape of the cylindrical battery 10 may be applied. That is, the second module 42 including the penetration portion 421 having a different shape according to the shape of the cylindrical battery 10 may be applied. However, a relationship between the shape of the cylindrical battery 10 and the penetration portion 421 of the second module 42 is not limited to the foregoing description. For example, if the length of the cylindrical battery 10 is long, the second module 42 having the penetration portion 421 having the same shape may be arranged on the first module 41.

In some embodiments, the second module 42 arranged on the first module 41 may be replaced according to the shape of the cylindrical battery 10 inserted into the battery heating device 1. That is, the second module 42 including the penetration portion 421 having a different shape according to the shape of the cylindrical battery 10 may be applied.

The first module 41 and the second module 42, according to some embodiments, may include a fixing element 51. The fixing element 51 may be configured to fix relative positions of the first module 41 and the second module 42. The fixing element 51 may fix the position of the penetration portion 421 of the second module 42 to the opening 411 of the first module 41. The fixing element 51 may be configured to fix the penetration portion 421 to a position corresponding to the opening 411. If the penetration portion 421 is fixed to the position corresponding to the opening 411, a position at which the cylindrical battery 10 is inserted into the opening 411 of the first module 41 may be adjusted. If the penetration portion 421 is fixed to the position corresponding to the opening 411, a position at which the cylindrical battery 10 is inserted into the accommodation space 410 of the first module 41 may be adjusted.

The fixing element 51 may fix each penetration portion 421 to the position corresponding to the opening 411 even if the second module 42 arranged on the first module 41 is replaced according to the shape of the cylindrical battery 10. For example, any one of the fixing elements 51 of the first module 41 and the second module 42 may include a projection form and the other may have a groove form. For example, the fixing elements 51 in the first module 41 and the fixing elements 51 in the second module 42 may be arranged symmetrically to one another. However, the function and the shape of the fixing element 51 are examples and are not limited to the foregoing description.

The second module 42 may be configured such that the cylindrical battery 10 inserted through the penetration portion 421 adjusts the position at which the cylindrical battery 10 is accommodated in the accommodation space 410 of the first module 41. A detailed description for the support module 40 including the first module 41 and the second module 42 to adjust the position at which the cylindrical battery 10 is accommodated will be described later.

In some embodiments, the battery heating device 1 may include a heating element 3. The heating element 3 may be configured to heat the cylindrical battery 10 accommodated in the battery heating device 1. The cylindrical battery 10 may be heated by the heating element 3. Heating of the cylindrical battery 10 may be at least a part of a manufacturing process of the cylindrical battery 10. Heating of the cylindrical battery 10 may be at least a part of an activation process of a secondary battery.

The heating element 3, according to some embodiments, may be between the lower plate 2 and the support module 40. The heating element 3 may be arranged on the lower plate 2. The heating element 3 may be arranged under the support module 40. The lower plate 2, the heating element 3, and the support module 40 may be sequentially arranged from the ground. If the heating element 3 is arranged under the support module 40, the heating element 3 may transfer heat well to the support module 40. If the heating element 3 is arranged on the lower plate 2, heat emitted from the heating element 3 may be transferred well to the support module 40. However, such an arrangement of the heating element 3, the lower plate 2, and the support module 40 is an example, and the present disclosure is not limited thereto.

The heat emitted from the heating element 3 may heat the support module 40. The support module 40 may transfer the heat emitted from the heating element 3 to the cylindrical battery 10. The heating element 3 may heat the cylindrical battery 10 through the support module 40. The heating element 3 may heat the first module 41. The heating element 3 may heat the accommodation space 410 of the first module 41. The heating element 3 may heat the cylindrical battery 10 accommodated in the first module 41. The heating element 3 may heat the cylindrical battery 10 accommodated in the accommodation space 410 of the first module 41. However, the function of the heating element 3 is not limited to the foregoing description.

The heating element 3 may heat the plurality of cylindrical batteries 10 at the same time. Each of the plurality of cylindrical batteries 10 accommodated in the support module 40 may be heated by the heating element 3 at the same time. The heating element 3 may uniformly heat each of the plurality of cylindrical batteries 10. The heating element 3 may uniformly transfer heat to each of the plurality of cylindrical batteries 10. If the heating element 3 simultaneously heats each of the plurality of cylindrical batteries 10, it may mean that the support module 40 heated by the heating element 3 simultaneously heats each of the plurality of cylindrical batteries 10. If the heating element 3 heats each of the plurality of cylindrical batteries 10, it may mean that the first module 41 heated by the heating element 3 heats each of the plurality of cylindrical batteries 10. However, a scheme for the heating element 3 to heat each of the plurality of cylindrical batteries 10 is not limited to the foregoing description. For example, the heating element 3 may heat the plurality of cylindrical batteries 10 in a form to transfer radiant heat to each of the plurality of cylindrical batteries 10 without using the first module 41.

The heating element 3 may be configured to transfer uniform heat to the plurality of accommodation spaces 410 included in the support module 40. For example, the heating element 3 may be uniformly arranged under the support module 40 to correspond to each of the plurality of accommodation spaces 410 of the support module 40. If the heating element 3 is uniformly arranged under the support module 40, it may mean that a heat transfer rate per unit area from the heating element 3 toward the bottom of the support module 40 is the same. For example, the heating element 3 may be a heater in the shape of a plate arranged under the support module 40. For example, the heating element 3 may include a plurality of heating elements arranged at a uniform density under the support module 40. However, the shape of the heating element 3 is not limited to the foregoing description. For example, the heating element 3 may be a heat medium flowing at the same flow rate per unit area under the support module 40.

The first module 41, according to some embodiments, may receive heat emitted from the heating element 3. The first module 41 may directly contact the heating element 3. The heating element 3 may transfer heat to the first module 41 in a heat conduction manner. If the first module 41 receives heat from the heating element 3 in the heat conduction manner, the first module 41 may effectively receive heat emitted from the heating element 3. The first module 41 may include a metal material. If the first module 41 includes the metal material, the first module 41 may receive well the heat emitted from the heating element 3. However, the material and component of the first module 41 are not limited to the foregoing description. A manner in which the first module 41 receives the heat from the heating element 3 is not limited to the foregoing description.

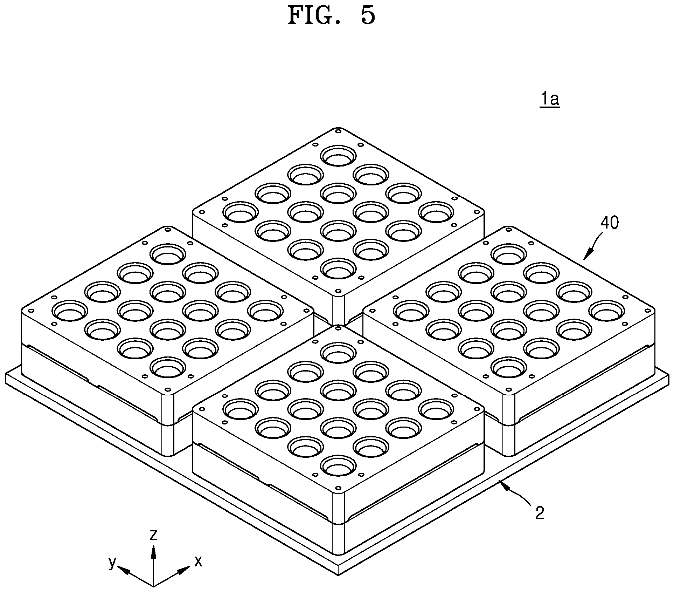

FIG. 5 is a perspective view of a battery heating device including a plurality of support modules, according to some embodiments.

Referring to FIGS. 1 to 5, the battery heating device 1, according to some embodiments, may include a plurality of support modules 40. The support module 40 may be provided in plural. Each of the plurality of support modules 40 may be arranged on the lower plate 2. The heating element 3 may be between the plurality of support modules 40 and the lower plate 2. The number of support modules 40 included in the battery heating device 1 may be adjusted according to the number of cylindrical batteries 10 inserted into the battery heating device 1. For example, if the accommodation space 410 for accommodating the cylindrical battery 10 is additionally required, the cylindrical battery 10 may be further accommodated by adding the support module 40 to the battery heating device 1. Addition of the support module 40 to the battery heating device 1 may include adding the support module 40 to an area on the lower plate 2 where the support module 40 is not arranged. Addition of the support module 40 to the battery heating device 1 may include further arranging the separate support module 40 on the support module 40, although not shown. However, the number of support modules 40 and arrangement thereof are not limited to the foregoing description.

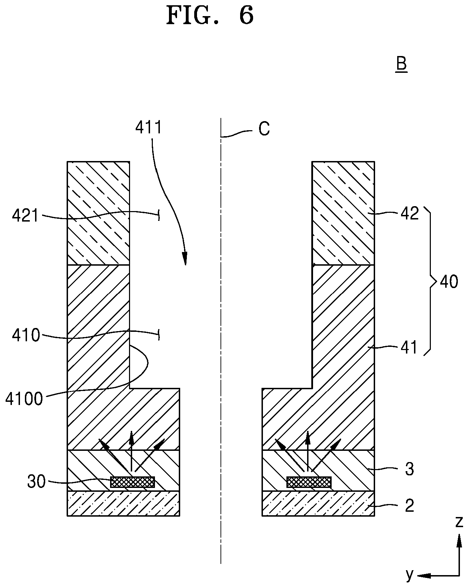

FIG. 6 is a cross-sectional view conceptually showing an enlarged portion of the battery heating device shown in FIG. 4.

Referring to FIGS. 2 to 6, the opening 411 of the first module 41 and the penetration portion 421 of the second module 42, according to some embodiments, may have the same central axis C. The penetration portion 421 of the second module 42 may be arranged to have the same central axis corresponding to the opening 411 of the first module 41. If the opening 411 of the first module 41 and the penetration portion 421 of the second module 42 have the same central axis, the position of the cylindrical battery 10 inserted into the opening 411 of the first module 41 through the penetration portion 421 of the second module 42 may be adjusted. If the opening 411 of the first module 41 and the penetration portion 421 of the second module 42 have the same central axis, the position of the cylindrical battery 10 accommodated in the accommodation space 410 of the first module 41 may be adjusted.

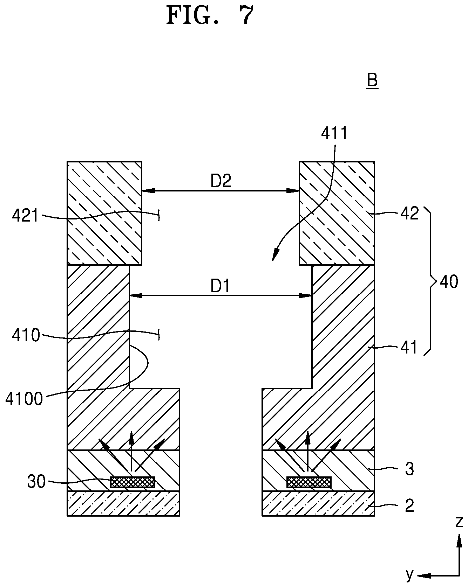

FIG. 7 is a cross-sectional view showing a penetration portion formed to have a diameter less than a diameter of an opening in the battery heating device shown in FIG. 6.

Referring to FIGS. 2, 6, and 7, the opening 411 of the first module 41, according to some embodiments, may have a predetermined diameter. The diameter of the opening 411 of the first module 41 may be a diameter D1 of the accommodation space 410 of the first module 41. The diameter of the accommodation space 410 may be a distance between opposite sidewalls of the accommodation space 410. The penetration portion 421 of the second module 42 may have a diameter corresponding to the diameter of the opening 411. The diameter D2 of the penetration portion 421 of the second module 42 may be formed less than the diameter of the opening 411 of the first module 41. If the diameter of the penetration portion 421 is formed less than the diameter of the opening 411, the position at which the cylindrical battery 10 inserted into the support module 40 is accommodated may be adjusted. If the diameter of the penetration portion 421 is formed less than the diameter of the opening 411, the position of the cylindrical battery 10 inserted into the opening 411 may be adjusted. If the diameter of the penetration portion 421 is formed less than the diameter of the opening 411, the cylindrical battery 10 accommodated in the support module 40 may not contact the sidewall 4100 of the accommodation space 410. If the diameter of the penetration portion 421 is formed less than the diameter of the opening 411, spaces between opposite sidewalls of the cylindrical battery 10 and the accommodation space 410 may be the same as each other.

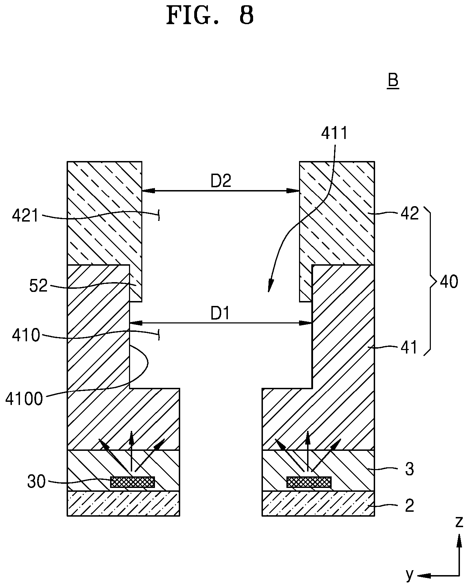

FIG. 8 is a cross-sectional view showing a second module having a protrusion structure formed therein in the battery heating device shown in FIG. 7.

Referring to FIGS. 2, 3, 6, and 8, the second module 42, according to some embodiments, may include a protrusion structure 52 extending from the penetration portion 421. The protrusion structure 52 may be formed to oppose the first module 41 from each penetration portion 421. The protrusion structure 52 may fix relative positions of the first module 41 and the second module 42. The protrusion structure 52 may fix the penetration portion 421 of the second module 42 to a position corresponding to the opening 411 of the first module 41. If the penetration portion 421 is fixed to the position corresponding to the opening 411, a position at which the cylindrical battery 10 is inserted into the opening 411 of the first module 41 may be adjusted. If the penetration portion 421 is fixed to the position corresponding to the opening 411, a position at which the cylindrical battery 10 is inserted into the accommodation space 410 of the first module 41 may be adjusted.

At least a part of the protrusion structure 52 according to embodiments may be inserted into the opening 411 of the first module 41. The protrusion structure 52 may have a cylindrical or an approximately cylindrical shape. An inner diameter of the protrusion structure 52 may be the same as the diameter of the penetration portion 421. The inner diameter of the protrusion structure 52 may be less than the diameter of the accommodation space 410. If the at least a part of the protrusion structure 52 included in the second module 42 is inserted into the opening 411, the penetration portion 421 may be fixed well to the position corresponding to the opening 411. The protrusion structure 52 may adjust the position at which the cylindrical battery 10 is inserted into the opening 411. The protrusion structure 52 may adjust the position at which the cylindrical battery 10 is accommodated in the accommodation space 410. However, the shape and arrangement of the protrusion structure 52 are not limited to the foregoing description.

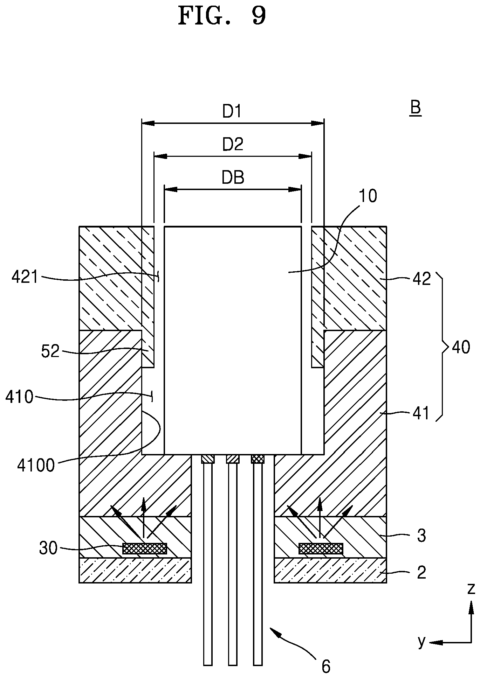

FIG. 9 shows a cylindrical battery during insertion into the battery heating device of FIG. 8.

Referring to FIGS. 2, 3, 6, and 9, the cylindrical battery 10, according to some embodiments, may be inserted into the support module 40. The support module 40 may accommodate the cylindrical battery 10. The cylindrical battery 10 may be accommodated in the accommodation space 410 of the first module 41. The second module 42 may adjust the position at which the cylindrical battery 10 is accommodated in the accommodation space 410 of the first module 41.

Adjustment of the position at which the cylindrical battery 10 is accommodated, by the second module 42, may include adjusting an insertion precision of the cylindrical battery 10. If the cylindrical battery 10 is precisely inserted into the support module 40, it may mean that the cylindrical battery 10 is accommodated in a central portion of the accommodation space 410 in the support module 40. If the cylindrical battery 10 is accommodated in the central portion of the accommodation space 410, it may mean that the axis of the cylindrical battery 10 matches the central axes of the opening 411 of the first module 41 and the penetration portion 421 of the second module 42.

The diameter of the penetration portion 421 may be formed greater than the diameter DB of the cylindrical battery 10. The diameter of the penetration portion 421 may be formed less than the diameter of the opening 411. The cylindrical battery 10 inserted through the penetration portion 421 may not contact the sidewall 4100 of the accommodation space 410.

The cylindrical battery 10 may be accommodated not to contact the sidewall 4100 of the accommodation space 410 in the support module 40. If the cylindrical battery 10 does not contact the sidewall 4100 of the accommodation space 410, heat may be uniformly transferred from the first module 41 to the cylindrical battery 10.

The first module 41 may receive the heat emitted from the heating element 3. The heat transferred from the heating element 3 to the first module 41 may be heat transferred from a heating device 30 included in the heating element 3 to the first module 41. The first module 41 may transfer the heat emitted from the heating element 3 to the cylindrical battery 10. The cylindrical battery 10 may be heated by the first module 41. A material of the first module 41 may include a metal material. However, the function and material of the first module 41 are not limited to the foregoing description. As an example, the first module may include another appropriate material.

The second module 42, according to some embodiments, may function to keep the accommodation space 410 warm. The second module 42 may prevent the heat transferred from the first module 41 to the cylindrical battery 10 from being emitted to outside of the battery heating device 1. A material of the second module 42 may include a thermal insulation material. However, the function and material of the second module 42 are not limited to the foregoing description. As an example, the second module may include another appropriate material.

The battery heating device 1, according to some embodiments, may include a control module 6 configured to detect a temperature of each accommodation space 410. The control module 6 may control the heating element 3 to uniformly heat each cylindrical battery 10. The control module 6 may be arranged in each of the accommodation spaces 410 that accommodate the plurality of cylindrical batteries 10. The control module 6 may be formed under the accommodation space 410. The control module 6 may be formed to penetrate the support module 40, the heating element 3, and the lower plate 2 from thereunder. However, the function and arrangement of the control module 6 are not limited to the foregoing description.

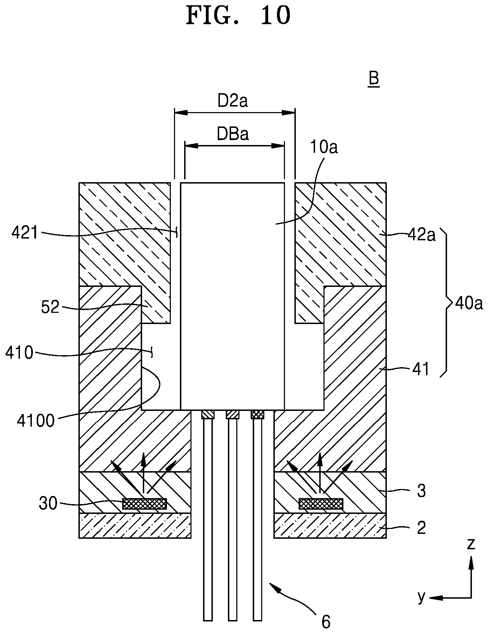

FIG. 10 shows a cylindrical battery with a diameter less than that of a cylindrical battery inserted into the battery heating device of FIG. 9 during insertion.

Referring to FIGS. 2, 3, 6, 9, and 10, the cylindrical battery 10 insertable into the battery heating device 1, according to some embodiments, may have various shapes. For example, the cylindrical battery 10a in FIG. 10 having the diameter DBa less than that of the cylindrical battery 10 inserted into the battery heating device 1 in FIG. 9 may be inserted into the battery heating device 1.

The second module 42 arranged on the first module 41 may be replaced according to the shape of the cylindrical battery 10 inserted into the battery heating device 1. That is, the second module 42a of support module 40a including the penetration portion 421 having a different shape according to the shape of the cylindrical battery 10a may be applied. For example, diameter D2a of the penetration portion 421 of the second module 42 may be different from diameter D2.

By differently applying the diameter of the penetration portion 421 included in the second module 42 according to the diameter of the cylindrical battery 10, the position at which the cylindrical battery 10 is accommodated in the accommodation space 410 may be adjusted. By differently applying the diameter of the penetration portion 421 included in the second module 42 according to the diameter of the cylindrical battery 10, the cylindrical battery 10 may be accommodated in the central portion of the accommodation space 410. If the cylindrical battery 10 is accommodated in the central portion of the accommodation space 410, each of the plurality of cylindrical batteries 10 may be uniformly heated.

Although the present disclosure has been described with reference to examples shown in the drawings, it will be understood by those of ordinary skill in the art that various modifications and equivalent other examples may be made from the shown examples.

The battery heating device according to the present disclosure may accommodate a plurality of cylindrical batteries and uniformly heat each of the plurality of cylindrical batteries.

In the battery heating device according to the present disclosure, the support module applicable differently depending on the shape of the cylindrical battery may stably accommodate each of the plurality of cylindrical batteries.

The battery heating device according to the present disclosure may provide a support module applicable to various types of cylindrical batteries by replacing a second module as the type of a cylindrical battery to which the support module is to be applied is changed.

According to some embodiments, there is provided a method of manufacturing a battery heating device configured to accommodate and heat a plurality of cylindrical batteries, the method including: providing a lower plate; arranging a support module on the lower plate, wherein the support module is configured to allow each cylindrical battery of the plurality of cylindrical batteries to be inserted into the support module; and arranging a heating element between the lower plate and the support module, wherein the heating element is configured to heat the plurality of cylindrical batteries, wherein the support module comprises: a first module comprising a plurality of accommodation spaces configured to accommodate the plurality of cylindrical batteries and a plurality of openings configured to allow the plurality of cylindrical batteries to be respectively inserted into the plurality of openings; and a second module arranged on the first module and comprising a plurality of penetration portions respectively corresponding to the plurality of openings to adjust a position at which the plurality of cylindrical batteries are respectively accommodated in the plurality of accommodation spaces when accommodated therein.

According to some embodiments, the method may include providing a fixing element configured to fix relative positions of the first module and the second module.

According to some embodiments, the method may include providing a control module configured to detect a temperature of each of the plurality of accommodation spaces.

According to some embodiments, the support module may be further configured such that the plurality of cylindrical batteries do not contact sidewalls of the plurality of accommodation spaces when accommodated therein.

According to some embodiments, diameters of the plurality of penetration portions may be different from each other according to different diameters of the plurality of cylindrical batteries.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims.

## Claims

1. A battery heating device (1) configured to accommodate and heat a plurality of cylindrical batteries, the battery heating device (1) comprising:
a lower plate (2);
a support module (40) arranged on the lower plate (2) and configured to allow each cylindrical battery (10, 10a) of the plurality of cylindrical batteries to be inserted into the support module (40); and
a heating element (3) arranged between the lower plate (2) and the support module (40) and configured to heat the plurality of cylindrical batteries,
wherein the support module (40) comprises:
a first module (41) comprising a plurality of accommodation spaces (410) configured to accommodate the plurality of cylindrical batteries therein and a plurality of openings (411) configured to allow the plurality of cylindrical batteries to be respectively inserted into the plurality of openings (411); and
a second module (42, 42a) arranged on the first module (41) and comprising a plurality of penetration portions (421) respectively corresponding to the plurality of openings (411) configured to adjust a position at which the plurality of cylindrical batteries are respectively accommodated in the plurality of accommodation spaces (410) when accommodated therein.

2. The battery heating device (1) according to claim 1, wherein the support module (40) is further configured such that the plurality of cylindrical batteries does not contact sidewalls (4100) of the plurality of accommodation spaces (410) when accommodated therein.

3. The battery heating device (1) according to claim 1 or 2, wherein diameters of the plurality of penetration portions (421) are different from each other according to different diameters of the plurality of cylindrical batteries.

4. The battery heating device (1) according to any one of claims 1 to 3, wherein each of the plurality of openings (411) and the plurality of penetration portions (421) is circular.

5. The battery heating device (1) according to claim 4, wherein an opening (411) of the plurality of openings (411) and a respective penetration portion (421) of the plurality of penetration portions (421) corresponding to the opening (411) have a same central axis.

6. The battery heating device (1) according to claim 4 or 5, wherein a first diameter of the respective penetration portion (421) corresponding to the opening (411) is less than a second diameter of the opening (411).

7. The battery heating device (1) according to any one of claims 1 to 6, wherein the support module (40) comprises a fixing element (51) configured to fix relative positions of the first module (41) and the second module (42, 42a).

8. The battery heating device (1) according to any one of claims 1 to 7, wherein the second module (42, 42a) comprises a protrusion structure (52) extending from each of the plurality of the penetration portions (421), and
wherein the protrusion structure (52) is formed to oppose the first module (41) from each of the plurality of penetration portions (421).

9. The battery heating device (1) according to claim 8, wherein at least a part of the protrusion structure (52) is inserted into each of the plurality of openings (411).

10. The battery heating device (1) according to any one of claims 1 to 9, wherein a material of the first module (41) comprises a metal material.

11. The battery heating device (1) according to any one of claims 1 to 10, wherein a material of the second module (42, 42a) comprises a thermal insulation material.

12. The battery heating device (1) according to any one of claims 1 to 11, further comprising a control module (6) configured to detect a temperature of each of the plurality of accommodation spaces (410).

13. A method of manufacturing a battery heating device (1) configured to accommodate and heat a plurality of cylindrical batteries, the method comprising:
providing a lower plate (2);
arranging a support module (40) on the lower plate (2), wherein the support module (40) is configured to allow each cylindrical battery (10, 10a) of the plurality of cylindrical batteries to be inserted into the support module (40); and
arranging a heating element (3) between the lower plate (2) and the support module (40), wherein the heating element (3) is configured to heat the plurality of cylindrical batteries,
wherein the support module (40) comprises:
a first module (41) comprising a plurality of accommodation spaces (410) configured to accommodate the plurality of cylindrical batteries therein and a plurality of openings (411) configured to allow the plurality of cylindrical batteries to be respectively inserted into the plurality of openings (411); and
a second module (42, 42a) arranged on the first module (41) and comprising a plurality of penetration portions (421) respectively corresponding to the plurality of openings (411) configured to adjust a position at which the plurality of cylindrical batteries are respectively accommodated in the plurality of accommodation spaces (410) when accommodated therein.

14. The method according to claim 13, wherein the support module (40) is further configured such that the plurality of cylindrical batteries does not contact sidewalls (4100) of the plurality of accommodation spaces (410) when accommodated therein.

15. The method according to claim 13 or 14, further comprising providing a control module (6) configured to detect a temperature of each of the plurality of accommodation spaces (410).
